# EUROPÄISCHE PATENTANMELDUNG

(11) **EP 0 635 601 A1**
(43) Veröffentlichungstag der Anmeldung: **25.01.1995**
(21) Anmeldenummer: 94110512.4
(22) Anmeldetag: 06.07.1994
(51) Int. Cl.: D21F 1/20, F16F 7/10, F16F 15/027

(54) **Schüttelbock**

(30) Priorität: 22.07.1993 DE 4324595
(71) Anmelder: Voith Sulzer Papiermaschinen GmbH, 89509 Heidenheim (DE)
(72) Erfinder: Arnhold, Andreas, D-88255 Baienfurt (DE); Münch, Rudolf, D-88213 Ravensburg (DE)

(57) **Zusammenfassung**

Der erfindungsgemäße Schüttelbock dient insbesondere zum Schütteln der Brustwalze im Blattbildungsbereich einer Papiermaschine. Diese zu versetzende Masse (3) wird durch eine Betätigungsvorrichtung (2) in eine gewünschte, im wesentlichen horizontal eindimensionale Zwangsbewegung versetzt. Dabei stützen sich die Gegenkräfte über eine Gegenmasse (4) ab. Die Betätigungsvorrichtung enthält ein Verbindungselement (1), welches längenveränderbar, insbesondere elastisch längenveränderbar, ist. Durch den zur Betätigungsvorrichtung (2) gehörenden Schwingungsmotor (5) wird das ganze System angeregt und wunschgemäß in Bewegung gehalten. Es lassen sich sowohl Schüttelfrequenz als auch Schüttelhub einstellen. Durch die erfindungsgemäße Ausführung werden praktisch keine Schwingungen auf die Umgebung, insbesondere das Fundament, übertragen.

## Beschreibung

Die Erfindung betrifft einen Schüttelbock mit einer Betätigungsvorrichtung zum Versetzen einer Masse gemäß dem Oberbegriff des Anspruchs 1.

Schüttelböcke dieser Art werden z.B. zum Schütteln von schweren, teilweise siebumschlungenen Walzen einer Papiermaschine benutzt, um durch das Schütteln des Siebes die Entwässerung und die Qualität der entstehenden Papierbahn zu erhöhen. Die Schüttelbewegung wird dabei in horizontaler Richtung ausgeübt, wobei eine eindimensionale Bewegung quer zur Laufrichtung mit zwei Umkehrpunkten erzeugt wird. Das Schütteln der großen Masse der Walzen in ihrer axialen, d.h. horizontalen Richtung verursacht bei dem ständigen hin- und hergehenden Beschleunigen und Bremsen der Masse entsprechend große wechselnde Kräfte, die über die Konstruktion der Maschine von der Unterlage der Maschine aufgenommen werden müssen. Dies beeinträchtigt und belastet das ganze Gebäude, in dem die Maschine aufgestellt ist.

Nachteilig bei den bekannten Vorrichtungen ist, daß die antriebsseitig vorliegende Rotationsbewegung mit Hilfe aufwendiger und damit auch verschleißanfälliger, im Regelfall Kurbelstangen erfordernder Einrichtungen in eine Translationsbewegung umgewandelt werden muß, wodurch Reaktionskräfte entstehen, die wesentlich zu einem Auftreten von unerwünschten Vibrationen beitragen.

In der nicht vorveröffentlichten Patentanmeldung P 43 18 234.8 ist ein Vorschlag gemacht worden, die aufwendigen Konstruktionen mit rotierenden Gegengewichten und komplizierten Einstellvorrichtungen dadurch zu ersetzen, daß stattdessen Magneten verwendet werden, die mit wechselnden magnetischen Feldern derart beaufschlagt werden, daß sich dadurch eine transversale Hin- und Herbewegung erzeugen läßt. Diese Lösung hat zwar schon wesentliche Vorteile; die erforderlichen Magnetfelder sind jedoch von einer beträchtlichen Stärke, was gelegentlich zu Problemen führen kann, wie etwa die Beeinträchtigung des Bedienungspersonals oder die Beschädigung von empfindlichen Meßgeräten. Außerdem werden für die Beschleunigung und Abbremsung der schweren Massen große elektrische Ströme mit entsprechenden Leitungsverlusten benötigt.

Aufgabe der Erfindung ist es, einen Schüttelbock der eingangs angegebenen Art zu schaffen, welcher einerseits die Umgebung, insbesondere das Fundament, nicht mit Schwingungen belastet, andererseits kompakt und einfach im Aufbau ist und möglichst energiewirtschaftlich betrieben werden kann.

Diese Aufgabe wird durch das Kennzeichen des Anspruchs 1 gelöst.

Die Unteransprüche zeigen besonders günstige Ausführungsformen der Erfindung an.

Mit Hilfe der im Kennzeichen genannten Maßnahmen wird ein schwingungsfähiges System zum Schütteln geschaffen, das aufgrund seiner Ausgestaltung keine oder nur unwesentliche Vibrationen auf die Umgebung der Papiermaschine und des Schüttelbocks überträgt. Der Vorteil eines in sich schwingungsfähigen Systems liegt in dem geringen Energiebedarf zu seiner Betreibung, d.h. wenn sich nach der Inbetriebnahme des Systems einmal ein stationärer Betriebszustand eingestellt hat. Dabei können die zu versetzende Masse und die Gegenmasse eine im wesentlichen gegenläufige Transversalbewegung ausführen. Die Gegenmasse kann so gelagert sein, daß sie nur die Gewichtskräfte auf das Fundament überträgt, welche zeitlich konstant sind, also kaum eine Schwingungsbelastung hervorrufen.

Durch die spezielle Ausgestaltung mit Hilfe der längenveränderbaren Verbindung kann erreicht werden, daß die Gegenmasse kleiner als die zu versetzende Masse gehalten werden kann, da sich unterschiedliche Verschiebewege für Masse und Gegenmasse realisieren lassen.

Bei entsprechender Ausführung des Erfindungsgegenstandes mit einem federelastisch verformbaren Verbindungselement zwischen Betätigungsvorrichtung und zu versetzender Masse kann die Schüttelfrequenz sehr einfach verstellbar gemacht werden, wenn die Federcharakteristik veränderbar ist. Hierzu ergeben sich Möglichkeiten durch Luftfederelemente mit verstellbarem Druck oder auch Blattfedern mit veränderbarer Abstützung, also veränderbarer Wirklänge. Derartige Maßnahmen führen zu einer veränderten Resonanzfrequenz des Schwingungssystems.

Der im Anspruch 1 genannte Schwingungsmotor läßt sich auch ohne weiteres so ausführen, daß seine Schwingungsfrequenz der gewünschten Schüttelfrequenz anpaßbar ist. Außerdem kann durch Änderung der Impulsstärke sehr einfach der Schüttelhub verändert werden.

Die Erfindung wird beschrieben und erläutert anhand von Zeichnungen. Dabei zeigen:
- Figur 1:: Schema der Hauptteile des Erfindungsgegenstandes;
- Figur 2:: Seitenansicht des Erfindungsgegenstandes in einer Anordnung;
- Figur 3:: Drei verschiedene Stellungen des Schüttelbockes und der Masse 3;
- Figur 4:: Variante des Federelements mit Gummi-/Luftfedern;
- Figur 5:: Kompakte Ausführung der Betätigungsvorrichtung;
- Figur 6:: Kompakte Ausführung des Schüttelbocks;
- Figur 7:: Gewichtsveränderbare Gegenmasse.

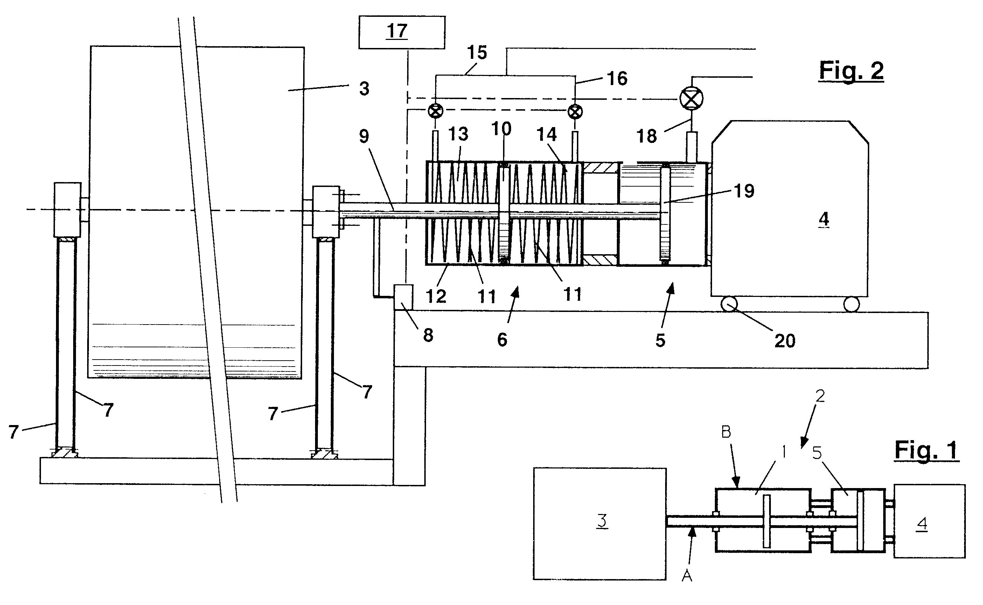

Fig. 1 zeigt das Grundprinzip des Erfindungsgegenstandes mit Hilfe einer schematisch dargestellten Anordnung von Schüttelbock und zu versetzender Masse 3. Man erkennt die Betätigungsvorrichtung 2, die im wesentlichen aus dem Schwingungsmotor 5 und dem Verbindungselement 1 besteht. Das Verbindungselement 1 ist längenveränderbar, wodurch sich ein Teil A und ein anderer Teil B relativ zueinander verschieben können. Dabei ist der eine Teil A mit der zu versetzenden Masse 3 und der andere Teil B mit der Gegenmasse 4 verbunden.

Fig. 2 zeigt schematisch in Seitenansicht eine konkrete Ausführungsform des Erfindungsgegenstandes. Die Masse 3 wird hier im wesentlichen durch die Brustwalze einer Papiermaschine, einen Teil des Siebes und der darauf befindlichen wässrigen Papierfaserschicht gebildet. Bei unterschiedlichen Papiersorten kann daher auch die zu versetzende Masse 3 unterschiedlich sein. Die Brustwalze ist beidseitig so gelagert, daß eine begrenzte axiale Beweglichkeit möglich ist, wobei hier die Lager mit dem Fundament beispielsweise durch Blattfedern 7 verbunden sind. Das Verbindungselement 1 enthält eine Schubstange 9 und ist durch eine Federvorrichtung 6 längenveränderbar mit dem Schwingungsmotor 5 verbunden. Die Federvorrichtung 6 enthält eine Druckscheibe 10, die beidseitig mit Druckfedern 11 gegen ein Gehäuse 12 abgefedert ist. Es bilden sich die Kammern 13 und 14, in denen sich die Federn 11 befinden und die durch Druckleitungen 15, 16 mit einem Gas gefüllt werden können. Die Druckscheibe 10 ist gegen das Gehäuse 12 abgedichtet. Durch entsprechende Regelvorrichtungen und Ventile läßt sich in den Kammern 13 und 14 ein gewünschter Druck einstellen, so daß dadurch die Federcharakteristik des Federelementes 6 verändert wird. In diesem Falle setzen sich also die Gesamtkräfte zusammen aus denen der Federn 11 und den Druckkräften in den Kammern 13 und 14. Die Kammern 13 und 14 können auch mit einem inkompressiblen Medium gefüllt sein, das mit einem externen Gaspolster in Verbindung steht. Auch eine mediengefüllte Kammer allein könnte schon eine ausreichende Verstellmöglichkeit der Federcharakteristik bewirken.

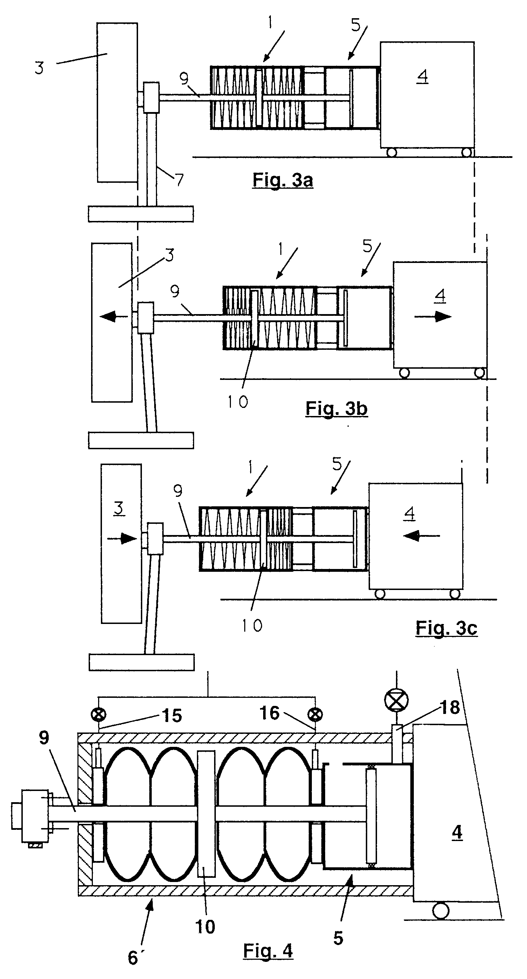

Es versteht sich, daß auch beidseitig wirkende Federn verwendbar sind, die auf Zug und Druck belastet werden. Es können auch solche Federn eingesetzt werden, deren Charakteristik selbst sich verändern läßt, wie etwa variabel eingespannte Blattfedern. Ein weiteres Beispiel zeigt die Fig.4 , nämlich handelsübliche Druckfederbälge, welche über Anschlüsse mit einem Druckgas von gewünschtem Druck versorgt werden können.

Als Schwingungsmotor 5 ist hier ein Zylinder/Kolbensystem dargestellt, bei dem der Kolben, zumindest einseitig, mit einem Druckmedium, sei es nun flüssig oder gasförmig, stoßweise durch die Leitung 18 beaufschlagt wird. Die Frequenz dieser Stöße wird im wesentlichen nach der gewünschten Schüttelfrequenz eingestellt und ihre Stärke nach dem gewünschten Schüttelhub. Der Kolben 19 dieses Zylinder/Kolbensystems ist mit der Schubstange 9 starr verbunden. In der Regel muß der Kolben 19 nur von einer Seite beaufschlagt werden, da die Rückstellkraft aus dem Federelement 6 kommt. Anstelle des gezeigten Zylinder/Kolbensystems kann mit Vorteil auch ein Gummibalg oder ein hydraulischer Stellmotor verwendet werden oder mehrere.

Auch ein Exzentermotor ist für diese Funktion denkbar.

Die Gegenmasse 4 nimmt die Gegenkräfte auf, die vom Schwingungsmotor 5 in Gegenrichtung zur zu versetzenden Masse 3 abgestützt werden müssen. Hierdurch ergibt sich die bereits erwähnte gegenläufige Bewegung von zu versetzender Masse 3 und Gegenmasse 4. Eine einfache Lagerung der Gegenmasse 4 wäre - wie hier gezeigt - durch Rollen möglich, die lediglich die vertikalen Gewichtskräfte auf das Fundament übertragen. Es sind aber auch andere Abstützungen denkbar, wie etwa hydrostatische Stützelemente, die bei der Masse 3 bereits dargestellten Blattfedern oder eine pendelnde Aufhängung. Gegebenenfalls muß bei den beiden letztgenannten Abstützelementen deren Resonanzfrequenz beachtet werden, da sie nicht der Schüttelfrequenz entsprechen darf.

Die Figuren 3a, 3b und 3c zeigen drei verschiedene Stellungen des Schüttelbockes und der zu versetzenden Masse 3. Figur 3a zeigt die Mittellage, Fig. 3b und 3c die Umkehrpunkte.

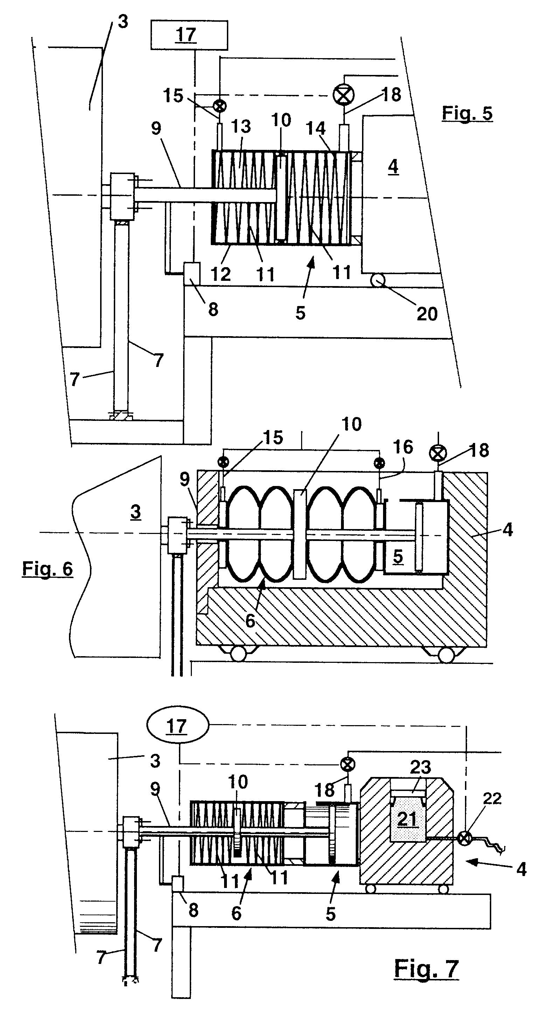

Der Einfachheit halber ist die Gegenmasse 4 in der Verlängerung der Schubrichtung auf der Gegenseite der zu versetzenden Masse 3 dargestellt. Je nach Platzverhältnissen sind auch andere Stellen möglich, z.B. zwischen Federvorrichtung 6 und Schwingungsmotor 5. Die Unterbringung der Gegenmasse 4, möglicherweise auch zusammen mit der Betätigungsvorrichtung 2 oder einem Teil von dieser, im Innern der Masse 3 wäre eine besonders kompakte Lösung, wenn auch wohl durch entsprechend hohen konstruktiven Aufwand erkauft. Eine einfachere Möglichkeit, Platz zu sparen, ist darin zu sehen, den Schüttelbock zwar neben der Masse 3 aufzustellen, aber die Betätigungsvorrichtung 2 ganz oder teilweise innerhalb der Gegenmasse 4 anzuordnen (Fig. 6).

Auch die Größe der Gegenmasse 4 kann in besonderen Ausführungsformen variierbar sein, wodurch sich die Resonanzfrequenz einstellen läßt. Fig.7 zeigt in der Gegenmasse 4 eine befüllbare Aufnahmevorrichtung 21 für als Zusatzgewicht dienende Flüssigkeit, die über eine regelbare Dosiervorrichtung 22 zu- oder abführbar ist. Um Schwappen zu verhindern, wird die Flüssigkeit mit einem Hubdeckel 23 von oben eingeschlossen. Natürlich sind auch andere Möglichkeiten vorhanden, um die Größe der Gegenmasse, sei es im Stillstand oder im Betrieb zu verändern. Eine solche Änderung kann auch als Grobeinstellung der Frequenz im Stillstand erfolgen.

Neben den bisher beschriebenen Ausführungen, bei der Federvorrichtung 6 und Schwingungsvorrichtung 5 getrennt sind, läßt sich die Betätigungsvorrichtung 2 durch Zusammenfassung auch kompakter bauen. So könnte z.B. die Kammer14 als Schwingungsmotor dienen und nur die Kammer 13 zur Anpassung der Federcharakteristik (Fig. 5) mit einem Gas von definiertem Druck gefüllt sein.

Um den erfindungsgemäßen Schüttelbock steuern zu können, ist ein Positionsmelder 8 vorteilhaft, der direkt oder indirekt die momentane Stellung der zu versetzenden Masse 3 ermittelt und über den zeitlichen Ablauf dieser Positionen Informationen über Schüttelhub und Schüttelfrequenz an eine Regelvorrichtung 17 weitergeben kann. Auch ein Beschleunigungsmesser ist geeignet, um der Regelvorrichtung 17 ein verwertbares Signal zu liefern. Unter Umständen ist ein weiterer Positionsmelder oder Beschleunigungsmesser für die Gegenmasse 4 von Vorteil.

## Patentansprüche

1. Schüttelbock mit einer Betätigungsvorrichtung (2) zum Versetzen einer Masse (3) in eine überwiegend eindimensionale, hin- und hergehende Zwangsbewegung in horizontaler Richtung, insbesondere zum Schütteln von schweren, zur Führung eines Siebes dienenden Walzen einer Papiermaschine sowie mit einer bewegbaren und mit der Betätigungsvorrichtung (2) verbundenen Gegenmasse (4),
**dadurch gekennzeichnet**,
daß die Betätigungsvorrichtung (2) einen Schwingungsmotor (5) enthält und daß sie mit der zu versetzenden Masse (3) durch ein solches Verbindungselement (1) verbunden ist, das in der Richtung der Zwangsbewegung kontrollierbar längenveränderbar ist, wobei ein Teil (A) mit der zu verschiebenden Masse (3) in formschlüssiger Verbindung steht und ein anderer Teil (B) mit der Gegenmasse (4).

2. Schüttelbock nach Anspruch 1,
**dadurch gekennzeichnet**,
daß das Verbindungselement (1) in der Richtung der Zwangsbewegung federelastisch verformbar ist.

3. Schüttelbock nach Anspruch 2,
**dadurch gekennzeichnet**,
daß das Verbindungselement (1) eine Federvorrichtung (6) aufweist, deren Federcharakteristik veränderbar und einstellbar ist.

4. Schüttelbock nach Anspruch 3,
**dadurch gekennzeichnet**
daß die Federvorrichtung (6) mindestens ein druckveränderbares Gaspolster enthält.

5. Schüttelbock nach Anspruch 3,
**dadurch gekennzeichnet**
daß die Federvorrichtung (6) mindestens eine veränderbar eingespannte Feder enthält.

6. Schüttelbock nach Anspruch 4 oder 5,
**dadurch gekennzeichnet**,
daß die Federvorrichtung (6) als eine Baueinheit mit einer Druckscheibe (10) ausgebildet ist, welche mit dem einen Teil (A) des Verbindungselementes (1) verbunden und auf beiden Seiten mit wegabhängigen Kräften beaufschlagbar ist, die sie gegen den anderen Teil (B) des Verbindungselementes (1) abstützen.

7. Schüttelbock nach Anspruch 4, 5 und 6,
**dadurch gekennzeichnet**,
daß beiderseits der Druckscheibe (10) sowohl Federn als auch ein Gaspolster vorhanden sind.

8. Schüttelbock nach Anspruch 1,
**dadurch gekennzeichnet**,
daß der Schwingungsmotor (5) mit veränderbarer und einstellbarer Frequenz betreibbar ist.

9. Schüttelbock nach Anspruch 1 oder 8,
**dadurch gekennzeichnet**,
daß der Schwingungsmotor (5) einen Hydraulikzylinder enthält, dem eine Druckflüssigkeit in der gewünschten Schüttelfrequenz stoßweise zu- und abgeführt werden kann.

10. Schüttelbock nach Anspruch 6, 7 oder 8 und 9,
**dadurch gekennzeichnet**,
daß eine Baueinheit gebildet wird aus Federvorrichtung (6) und Schwingungsmotor (5).

11. Schüttelbock nach Anspruch 1,
**dadurch gekennzeichnet**,
daß der Schwingungsmotor (5) einen Pneumatikzylinder enthält, dem ein Gas in der gewünschten Schüttelfrequenz stoßweise zu- und abgeführt werden kann.

12. Schüttelbock nach Anspruch 1,
**dadurch gekennzeichnet**,
daß die Gegenmasse (4) im wesentlichen in Richtung der Zwangsbewegung frei bewegbar und dabei so gelagert ist, daß im Betrieb des Schüttelbocks ihre Unterlage keine oder nur relativ geringe horizontale Kräfte von der Gegenmasse (4) erfährt.

13. Schüttelbock nach einem der voranstehenden Ansprüche,
**dadurch gekennzeichnet**,
daß er einen Positionsmelder (8) aufweist, der direkt oder indirekt die jeweilige - sich im Betrieb verändernde - Position der zu versetzenden Masse (3) ermitteln und ein entsprechendes Signal abgeben kann.

14. Schüttelbock nach einem der voranstehenden Ansprüche,
**dadurch gekennzeichnet**,
daß er einen Beschleunigungsmesser (8) aufweist, der direkt oder indirekt die jeweilige Beschleunigung der zu versetzenden Masse (3) ermitteln und ein entsprechendes Signal abgeben kann.

15. Schüttelbock nach Anspruch 3 und 13 oder 14,
**dadurch gekennzeichnet**,
daß er eine Regelvorrichtung (17) aufweist, die im Betrieb unter Vorgabe von gewünschter Frequenz und/oder gewünschtem Schüttelhub den Schwingungsmotor (5) und die Verstellung der Charakteristik der Federvorrichtung (6) ansteuert.

16. Schüttelbock nach einem der voranstehenden Ansprüche,
**dadurch gekennzeichnet**.
daß die Gegenmasse (4) veränderbar ist.

17. Schüttelbock nach Anspruch 16,
**dadurch gekennzeichnet**,
daß die Gegenmasse (4) eine konstante Grundmasse enthält und eine Aufnahmevorrichtung für Zusatzmassenteile von wesentlich kleinerem Gewicht als dem der Grundmasse.

18. Schüttelbock nach Anspruch 16,
**dadurch gekennzeichnet**,
daß die Gegenmasse (4) eine konstante Grundmasse enthält und eine Aufnahmevorrichtung (21) für als Zusatzmasse dienende Flüssigkeit.

19. Schüttelbock nach Anspruch 18,
**dadurch gekennzeichnet**,
daß die Aufnahmevorrichtung (21) so gestaltet und über eine Dosiervorrichtung (22) an eine Flüssigkeitsversorgung angeschlossen ist, daß im Betrieb des Schüttelbocks die in der Aufnahmevorrichtung befindliche Flüssigkeitsmenge veränderbar ist.

20. Schüttelbock nach Anspruch 16, 17, 18 oder 19,
**dadurch gekennzeichnet**,
daß die Anpassung der Resonanzfrequenz des Schüttelbocks an die gewünschte Schüttelfrequenz durch Ändern der Gegenmasse (4) erfolgt.

21. Schüttelbock nach Anspruch 16, 17, 18 oder 19,
**dadurch gekennzeichnet**,
daß vorab die Grobeinstellung der Resonanzfrequenz des Schüttelbocks an die ungefähre Schüttelfrequenz durch Ändern der Gegenmasse (4) erfolgen kann und die Feineinstellung durch Ändern der Federcharkteristik der Federvorrichtung (6).

22. Schüttelbock nach Anspruch 16, 17, 18 oder 19,
**dadurch gekennzeichnet**,
daß vorab die Grobeinstellung der Resonanzfrequenz des Schüttelbocks an die ungefähre Schüttelfrequenz durch Ändern der Federcharkteristik der Federvorrichtung (6) erfolgen kann und die Feineinstellung durch Ändern der Gegenmasse (4).

23. Schüttelbock nach Anspruch 19 und 20,
**dadurch gekennzeichnet**,
daß er eine Regelvorrichtung (17) aufweist, die im Betrieb unter Vorgabe von gewünschter Frequenz und/oder gewünschtem Schüttelhub den Schwingungsmotor (5) und die Dosiervorrichtung für die in der Aufnahmevorrichtung (21) befindliche Flüssigkeitsmenge ansteuert.

24. Schüttelbock nach einem der voranstehenden Ansprüche,
**dadurch gekennzeichnet**,
daß die Betätigungseinrichtung (2) in der Gegenmasse (4) untergebracht ist.

25. Schüttelbock nach einem der voranstehenden Ansprüche,
**dadurch gekennzeichnet**,
daß Schwingungsmotor (5) und Federvorrichtung (6) als kompakte Baueinheit zusammengefaßt sind.

26. Schüttelbock nach Anspruch 24 oder 25,
**dadurch gekennzeichnet**,
daß der Schüttelbock zumindest teilweise im Innern der zu versetzenden Masse (3) untergebracht ist.

27. Schüttelbock nach einem der voranstehenden Ansprüche,
**dadurch gekennzeichnet**,
daß das Gewicht der Gegenmasse (4) geringer ist als das der zu versetzenden Masse (3).

28. Schüttelbock nach Anspruch 27,
**dadurch gekennzeichnet**,
daß das Gewicht der Gegenmasse (4) 10 bis 30 % von dem der zu versetzenden Masse (3) beträgt.
